**Europäisches Patentamt**

**European Patent Office**

**Office européen des brevets**

(19)

(11) Veröffentlichungsnummer: **0 053 297**
**A1**

(12) **EUROPÄISCHE PATENTANMELDUNG**

(21) Anmeldenummer: 81109386.3

(22) Anmeldetag: 30.10.81

(51) Int. Cl.³: **B 62 D 5/06**

(30) Priorität: **02.12.80 DE 3045428**

(43) Veröffentlichungstag der Anmeldung: **09.06.82**
**Patentblatt 82/23**

(84) Benannte Vertragsstaaten: **BE CH DE FR GB IT LI NL SE**

(71) Anmelder: **Lansing GmbH, Industriestrasse 8,**
**D-6712 Bobenheim-Roxheim (DE)**

(72) Erfinder: **Wind, Franz, Richard-Wagner-Strasse 64,**
**D-6719 Eisenberg 3 (DE)**

(74) Vertreter: **Glawe, Richard, Dr. Patentanwälte Dr. Richard**
**Glawe et al, Dr. Walter Moll, Dipl.-Ing. Klaus Delfs Dr.**
**Ulrich Mengdehl Dr. Heinrich Niebuhr Postfach 260 162,**
**D-8000 München 26 (DE)**

(54) Lenkeinrichtung für Flurförderzeuge.

(57) Bei einer hydraulischen, durch Pumpe gespeisten Lenkeinrichtung für Flurförderzeuge wird erfindungsgemäß die
Drehzahl der Pumpe (6) durch einen Regler (12) in Abhängigkeit von der durchzuführenden Lenkbewegung an deren
Leistungsbedarf geregelt. Hierdurch werden Energieverbrauch, Verschleiß und Geräuschentwicklung wesentlich
herabgesetzt. Der Regler kann z.B. auf deutlich ändernden
Hydraulikdruck oder auf den belastungsabhängigen Motorstrom der Pumpe ansprechen.

- 1 -

"Lenkeinrichtung für
Flurförderzeuge"

B e s c h r e i b u n g
------------------------------

Die Erfindung betrifft eine Lenkeinrichtung für ein Flurförderzeug od. dgl. Fahrzeug, bei dem ein auf den Anschlag des Lenkrades ansprechender Lenkgeber einen von einer Pumpe mit Hydraulikdruck versorgten hydraulischen Lenkantrieb steuert.

Bei derartigen Elektrofahrzeugen wird üblicherweise im Hydrauliksystem das gesamte Druckmedium, beispielsweise Drucköl durch eine von einem separaten Elektromotor angetriebene Pumpe umgewälzt, um die für die maximale Lenkgeschwindigkeit erforderliche Leistung bereit zu stellen. Dabei wird der Ölförderstrom durch Steuerventile geregelt. Durch den ständigen Betrieb der Pumpe wird das Öl übermäßig erhitzt und das Hydrauliksystem einem hohen Verschleiß ausgesetzt. Durch die ständige Bereitstellung der maximal erforderlichen Leistung unabhängig von der durch den Lenkvorgang tatsächlich benötigten Leistung wird zudem Energie nutzlos verbraucht und die Umwelt unnötig durch den hohen Lärmpegel der Pumpe belastet.

Durch die DE-OS 23 41 830 ist ein Elektrofahrzeug bekannt, bei dem die Nachteile einer ständig mit Höchstleistung laufenden Pumpe dadurch beseitigt werden, daß die Pumpe mit einer vorherbestimmten Wahlgeschwindigkeit antreibbar ist, wobei die gewählte Motordrehzahl im wesentlichen unabhängig von der Pumpenlast aufrecht erhaltbar ist.

Aufgabe der vorliegenden Erfindung ist es, eine Lenkeinrichtung dieser Art so auszubilden, daß sie sich an den momentanen Leistungsbedarf des Lenkvorganges selbsttätig anpaßt.

Diese Aufgabe wird erfindungsgemäß gelöst durch eine Lenkeinrichtung der eingangs genannten Art, die dadurch gekennzeichnet ist, daß die Drehzahl der Pumpe durch einen Regler, der einen, auf eine dem Leistungsbedarf im Lenkantrieb entsprechende Meßgröße ansprechenden IST-Wertgeber aufweist, steuerbar ist. D. h. der die Hydrau-

BAD ORIGINAL

likpumpe antreibende Elektromotor kann bei Nichtbetätigung des Lenkrades auf eine Mindestleerlaufdrehzahl abgesenkt und bei einer Lenkbewegung auf eine der Lenkgeschwindigkeit entsprechende Drehzahl hochgeregelt werden. Wird die mit einer Leerlaufdrehzahl laufende Pumpe durch eine Lenkbewegung hydraulisch belastet, fließt im Motorkreis ein höherer Strom, der über den Leistungsregler eine höhere Motordrehzahl bewirkt. Wird die Lenkbewegung unterbrochen, reduziert sich der Motorstrom und der Leistungsregler regelt auf die Leerlaufdrehzahl zurück.

Dadurch wird vorteilhafterweise erreicht, daß das Lenksystem gegenüber den bisherigen Systemen mit der geringsten Belastung der Umwelt und geringerem Energieverbrauch und Verschleiß ständig betriebsbereit ist.

Außer dem Leistungsregler, mit dem der Strommesser der Zwischenstromversorgung und Pumpenmotor geschaltet wird, ist kein weiteres Stellglied, Geber oder Regler, erforderlich. Die Erfindungsgemäße Einrichtung kann weiterhin in jede handelsübliche, elektrisch betriebene Hydrauliklenkung oder Lenkunterstützung zwischengeschaltet werden.

Zweckmäßigerweise kann der IST-Wertgeber auf den Hydraulikdruck oder auf den sich bei Belastung der Pumpe ändernden Motorstrom ansprechen. Weiterhin kann der Regler eine Impulssteuereinheit zur gepulsten Stromversorgung der Pumpe steuern.

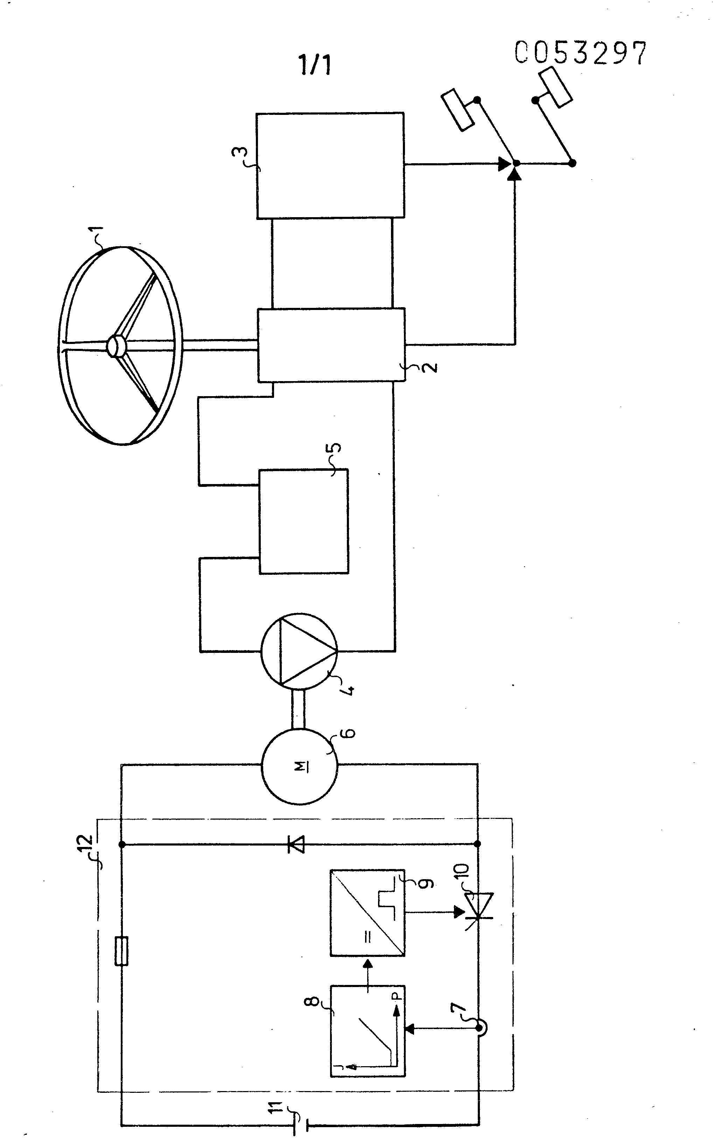

Eine Ausführungsform der Erfindung wird anhand
der einzigen Figur, die ein die Lenkeinrichtung
darstellendes Blockschaltbild zeigt, beschrieben.

Bei der in der Figur gezeigten Lenkeinrichtung
für Flurförderzeuge ist ein Lenkrad 1 mit einem
Lenkgeber 2 verbunden, der auf den Anschlag des
Lenkrades 1 anspricht und einen von einer Pumpe 4
mit einem Hydraulikdruck versorgten hydraulischen
Lenkantrieb 3 steuert. Die Pumpe 4 wird durch einen
Pumpenmotor 6 angetrieben, der über eine Stromquelle
11 gespeist wird. Zwischen der Stromquelle 11 und
dem Pumpenmotor 6 ist ein Leistungsregler 12 geschaltet, der eine vorgegebene Leerlaufspannung
und damit eine Leerlaufdrehzahl für den Fall des
Lenkstillstandes abgibt. Durch den freien Ölumlauf
zwischen der Pumpe 4 und dem Lenkgeber 2 wird relativ wenig Leistung und somit ein geringer Motorstrom benötigt.

Findet am Lenkrad 1 eine Lenkbewegung statt, so
wird der Ölstrom über den Lenkantrieb 3 geleitet
und dabei mit einem Gegendruck beaufschlagt, wodurch im Motor 6 eine Stromerhöhung ausgelöst wird. Dieser erhöhte Strom wird in einem Shunt 7 im Leistungsregler 12 erfaßt und auf einen Regler 8 weitergegeben. Durch das überproportionale Regelverhalten des Reglers 8 wird dem Wandler 9 eine höhere Spannung angeboten, wodurch das Einschaltverhältnis des Leistungsschalters 10 erhöht wird; d. h. der Leistungsschalter 10 bleibt relativ länger eingeschaltet. Bei weiterem Bedarf an Hydraulikleistung entsprechend der Lenkbewegung kann sich das Einschaltverhältnis bis auf 100 % erhöhen.

Wird die Lenkbewegung am Lenkrad 1 reduziert, vermindert sich dementsprechend auch der Motorstrom und der Lenkgeber 2 regelt zurück. Bei Lenkstillstand fällt der Motorstrom wieder auf den vom Leistungsregler 12 abgegebenen Leerlaufstrom zurück.

Obwohl die vorliegende Erfindung anhand des vorstehenden Ausführungsbeispieles beschrieben wurde, sind zahlreiche Veränderungen innerhalb des Schutzumfanges denkbar. So kann beispielsweise die Strommessung statt durch den Shunt 7 magnetisch oder induktiv erfolgen. Weiterhin kann statt dem Motorstrom auch der Hydraulikdruck als Bezugsgröße ausgewertet werden. Der Leistungsschalter kann mit Thyristoren oder Transistoren bestückt sein und der gesamte Leistungsregler 12

0053297

kann statt,wie beschrieben,mit Impulsen digital auch
analog ausgeregelt werden.

"Lenkeinrichtung für
Flurförderzeuge"


A n s p r ü c h e
----------------------------


1. Lenkeinrichtung für ein Flurförderzeug od. dgl.
Fahrzeug, bei dem ein auf den Ausschlag des Lenkrades
ansprechender Lenkgeber einen von einer Pumpe mit Hydraulikdruck versorgten hydraulischen Lenkantrieb steuert,
dadurch  g e k e n n z e i c h n e t ,  daß die Drehzahl der Pumpe (6) durch einen Regler (12), der einen
auf eine dem Leistungsbedarf im Lenkantrieb entsprechende Meßgröße ansprechenden  IST-Wertgeber aufweist,
steuerbar ist.


2. Lenkeinrichtung nach Anspruch 1, dadurch  g e -
k e n n z e i c h n e t ,  daß der IST-Wertgeber auf
den Hydraulikdruck anspricht.

3. Lenkeinrichtung nach Anspruch 1, dadurch g e -
k e n n z e i c h n e t , daß der IST-Wertgeber auf
den sich bei Belastung der Pumpe (6) ändernden Motorstrom anspricht.

4. Lenkeinrichtung nach Anspruch 1, dadurch g e -
k e n n z e i c h n e t , daß der Regler (12) eine
Impulssteuereinheit (9) zur gepulsten Stromversorgung
der Pumpe (6) steuert.

BAD ORIGINAL

1/1

C053297

Europäisches
Patentamt

**EUROPÄISCHER RECHERCHENBERICHT**

C 0 5 3 2 9 7

Nummer der Anmeldung

EP 81 10 9386.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A1 - 2 915 890</u> (STILL GMBH)<br>* Ansprüche; Seite 9, Zeilen 9 bis 34; Fig. *<br><br>-- | 1,4 |
| X | <u>DE - A1 - 2 630 916</u> (CLARK EQUIPMENT CO.)<br>* Ansprüche 1, 4, 5; Seite 1, Zeile 4 bis Seite 2, Zeile 15; Fig. *<br><br>-- | 1,2 |
| A | <u>GB - A - 1 501 955</u> (RANSOMES SIMS & JEFFERIES LTD.)<br>* Seite 1, Zeilen 9 bis 14; Seite 2, Zeile 127 bis Seite 3, Zeile 35; Fig. 4 * | 1 |
| Y | * Seite 3, Zeilen 36 bis 112; Fig. 5 *<br><br>-- | 3,4 |
| Y | <u>FR - A1 - 2 261 649</u> (R. BOSCH GMBH)<br>* Ansprüche 1 bis 4, 8, 9; Seite 1, Zeilen 1 bis 33; Fig. 1 *<br>&   DE - B1 - 2 407 601<br><br>---- | 3 |

### KLASSIFIKATION DER ANMELDUNG (Int Cl.)

B 62 D 5/06

### RECHERCHIERTE SACHGEBIETE (Int. Cl.)

B 62 D 5/00
H 02 P 7/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-02-1982 | PETTI |

EPA form 1503.1   06.78